# EUROPEAN PATENT APPLICATION

(11) **EP 4 714 719 A1**
(43) Date of publication of application: **25.03.2026**
(21) Application number: 24201991.7
(22) Date of filing: 23.09.2024
(51) Int. Cl.: B60L 5/00, B60L 5/40, B60L 9/00

(54) **SYSTEM AND METHOD FOR ELECTRICALLY FEEDING ELECTRICALLY POWERED VEHICLES**

(71) Applicant: BLUVEIN INNOVATION PTY. LTD., Northgate, QLD 4013 (AU)
(72) Inventor: OLIVER, James, ASCOT, 4007 (AU)
(74) Representative: Groth & Co. KB

(57) **Abstract**

System (100) for feeding electrically feeding an electrically powered vehicle (1), the system comprising electric conductor(s) (5) extending along a road section on which the electrically powered vehicle travels. A current collector(s) (4) is configured to connect with the electric conductor(s) (5) when the electrically powered vehicle is within a working distance from the electric conductor(s). An ECU (20) is configured to determine if the electrically powered vehicle and electric conductor(s) are within said working distance from each other, and if so, activate a connectable state; when the connectable state is active, and the current collector(s) (4) and the electric conductor(s) (5) are not in electric contact, displace collector arm(s) (8) towards the electric conductor(s) (5) such as to achieve electric contact, and activate a connected state; and when the connected state is active, monitor the relative position of the electrically powered vehicle (1) to the electric conductor(s) (5).

## Description

### TECHNICAL FIELD

This invention relates to a field of automated electrical power transfer, and in particular to a method and a system for dynamic energy transfer to a moving vehicle.

### BACKGROUND

Concerns about the environmental impact of combustion of fossil fuels have led to an increased interest in electric vehicles, which have several potential benefits compared to vehicles with conventional internal combustion engines, including: a significant reduction of air pollution, as they do not emit harmful tailpipe emissions, reduced greenhouse gas emissions (depending on the fuel and technology used for electricity generation and/or charging the batteries) and reduced dependency on fossil fuels with increasingly variable supply and fluctuating prices. In underground applications such as mines, air pollution is particularly problematic.

With the increased utilization of electrical power feed and charging of onboard battery systems in vehicles, there's a rising need for efficient automated connection to power sources, either stationary or while driving.

WO 2016/174030 A1 discloses a system for electrical feeding of a vehicle in an underground environment such as a mine. The electrical feeding is used to propel the vehicle directly and/or to charge an onboard battery. The system comprises at least one elongated slotted element having at least one slot or groove in which electric conductors are arranged. The elongated slotted element may be suspended for example from the ceiling in the mine tunnels, and a current collector connects the vehicle electrically to the elongated slotted element.

Such a system is advantageous since it not only provides low emissions, reduced need for battery capacity, but also good safety properties due to the slotted electric conductors. However, further improvements are needed for energy transfer of a moving vehicle, so that electric contact can be easily achieved between the vehicle and the electric conductors.

### SUMMARY

An object of the invention is to solve or improve on at least some of the problems mentioned above in the background section.

These and other objects are achieved by the present invention by means of a system and a method according to the independent claims.

According to a first aspect of the invention, there is provided a system for electrically feeding at least one electrically powered vehicle. The system comprises at least one electric conductor extending along a road section on which the electrically powered vehicle is adapted to travel. The system further comprises an electrically powered vehicle comprising at least one current collector, and a vehicle electronic control unit, ECU, being electrically connected to said at least one current collector, wherein the at least one current collector comprises at least one contact element adapted to connect electrically with the at least one electric conductor, and wherein the at least one current collector further comprises at least one displaceable collector arm supporting the at least one contact element at its first end and being connected to the electrically powered vehicle at its second end, and wherein the current collector is configured to connect with the at least one electric conductor when the electrically powered vehicle is within a working distance from the at least one electric conductor. The ECU is configured to determine if the electrically powered vehicle and the at least one electric conductor are within said working distance from each other, and if so, activate a connectable state; when the connectable state is active, and the current collector and the at least one electric conductor are not in electric contact, control at least one actuator of the at least one collector arm such as to displace the at least one collector arm towards the at least one electric conductor such as to achieve, and thereafter activate a connected state; and when the connected state is active, monitor the relative position of the electrically powered vehicle to the at least one electric conductor.

The invention is based on the insight that by automatically switching to a "connectable" state (i.e., when the electrically powered vehicle is within a working distance from the at least one electric conductor), by automatically activating a "connected" state (i.e., the at least one current collector and the at least one electric conductor are in electric contact), and by monitoring the relative position of the electrically powered vehicle to the at least one electric conductor, dynamic energy transfer of a moving vehicle can be efficiently facilitated, which is especially useful for high demand applications. The term "dynamic energy transfer" means, without limitation, connecting an electrically powered vehicle with a power source (such as an electric conductor) while the electrically powered vehicle is in motion and maintaining a connection along a path of motion or roadway. The term "a working distance" means, without limitation, a connection range of a power source (such as an electric conductor). The working distance is usually a predetermined value which may be adjusted depending on the current configuration. The working distance may be considered as a connection trigger, which can trigger the action of at least one collector arm towards the at least one electric conductor such as to achieve electric contact between the at least one contact element and the at least one electric conductor. After the connection between the electrically powered vehicle and the power source is made, the relative position of the electrically powered vehicle to the at least one electric conductor is monitored to maintain the connection trigger. It is understood that the at least one electric conductor, extending along a road section on which the electrically powered vehicle is adapted to travel, is arranged in the sense that it is substantially parallel with a longitudinal direction of the road section. Further, the at least one electric conductor may be arranged on the road surface, partly or wholly recessed in one or more grooves in the road surface, or may be suspended above the road surface, for instance at a height such that it is located above the vehicle or on a lateral side of the vehicle. The at least one electric conductor may be considered as a power source. The at least one electrical conductor may comprise a track or rail such as a slotted rail. It is furthermore understood that the term "road section" refers to any type of surface on which the at least one electrically powered vehicle is adapted to travel, including not only roadways but also bottom surfaces of mining tunnels. The electrically powered vehicle may be a ground vehicle, a road vehicle, a mining vehicle, or a conveyance. It is furthermore understood that the electrically powered vehicle having a current collector is configured to be electrically propellable by means of electric power from its current collector and/or from an onboard energy storage device. In different applications, the relative position of the electrically powered vehicle to the at least one electric conductor may be different. For example, the relative position of the electrically powered vehicle to the at least one electric conductor may vary more in mining applications than on-road applications. It is therefore important to monitor the relative position of the electrically powered vehicle to the at least one electric conductor to make sure that the electrically powered vehicle and the at least one electric conductor are with a working distance from each other. Otherwise, the at least one current collector, between the electrically powered vehicle that is moving and the at least one electric conductor, may break or have reduced lifetime. The term "displaceable collector arm", means without limitation, a collector arm that is movable between different positions, where different positions can either facilitate the electric contact between the electrically powered vehicle and the at least one electric conductor, or cause the termination of the electric contact between the electrically powered vehicle and the at least one electric conductor.

In some embodiments, the ECU is configured to monitor the relative position of the electrically powered vehicle to the at least one electric conductor using a geometrical parameter of the at least one collector arm and at least one present position of said at least one collector arm. The term "monitor" may mean, without limitation, to repeatedly determine based on for example a pre-determined time interval or a specific event. The term "a geometrical parameter" may also be referred to as a geometric parameter, which may include length, width, thickness relating to the at least one collector arm or a component of the at least one collector arm. The geometrical parameter may also include length ratio, width ratio, thickness ratio relating to different components of the at least one collector arm. The at least one present position of the at least one collector arm may comprise angular position(s) of one or more pivotable collector arms/arm portions, elongation(s) of one or more telescopic arms/arm portions and/or lateral or longitudinal position(s) of one or more laterally or longitudinally displaceable arms. Using the known geometrical parameter(s) and measured present position(s) of the collector arm(s) is advantageous since accurate determination of relative position is possible.

In some embodiments, when the connected state is active, the ECU is further configured to determine if the vehicle is heading towards a position outside the working distance from the at least one electric conductor, and if so, control the at least one actuator of the at least one collector arm such as to displace the current collector away from the at least one electric conductor such as to disrupt electric contact therebetween, and disable the connected state and the connectable state.

In some embodiments, to determine if the electrically powered vehicle is heading towards a position outside the working distance from the at least one electric conductor, the ECU is further configured to determine if the relative position of the electrically powered vehicle to the at least one electric conductor and the working distance are within a pre-determined interval from each other.

In some embodiments, the system further comprises a GNSS (Global Navigation Satellite System) unit (such as a GPS unit), wherein to determine if the electrically powered vehicle is heading towards a position outside the working distance from the at least one electric conductor, the ECU is further configured to determine, by using a GNSS signal (such as a GPS signal) obtained from the GNSS unit and data concerning the position and extension of the electric conductor which the current collector is presently connected to, if the present position of the electrically powered vehicle is within a pre-determined interval from an end of said electric conductor which the current collector is presently connected to. The data concerning the position and extension of the electric conductor which the current collector is presently connected to may be map data stored in the ECU or obtainable via wireless connection to a map server.

In some embodiments, to determine if the electrically powered vehicle and the at least one electric conductor are within said working distance from each other, the ECU is further configured to determine a position of the electrically powered vehicle and a position of the at least one electric conductor, and/or determine a relative position of the electrically powered vehicle to the at least one electric conductor.

In some embodiments, to displace the at least one collector arm by means of the at least one actuator towards the at least one electric conductor such as to achieve electric contact therebetween, the ECU is further configured to determine a position of the electrically powered vehicle and a position of the at least one electric conductor, and/or to determine a relative position of the electrically powered vehicle to the at least one electric conductor, and to control an actuator to displace the collector arm to displace the at least one contact element towards the at least one electric conductor using said positions and/or relative position.

In some embodiments, the ECU is further configured to obtain a GNSS signal (such as a GPS signal) from a GNSS unit such as a GPS unit (which may be part of the system) and/or an augmented GNSS signal (such as an augmented GPS signal), and to determine a position of the electrically powered vehicle and a position of the at least one electric conductor, and/or to determine a relative position of the electrically powered vehicle to the at least one electric conductor, using the GNSS/GPS signal and/or augmented GNSS/GPS signal. Augmented GNSS/GPS is known in the art as GNSS/GPS aided by extra information relating to positioning, navigation, and timing that is not an inherently part of GNSS/GPS signal itself.

In some embodiments, to determine a position of the electrically powered vehicle and a position of the at least one electric conductor, and/or determine a relative position of the electrically powered vehicle to the at least one electric conductor comprises using at least one of the following: a local positioning system, simultaneous localization and mapping, SLAM, at least one sensor arranged on the electrically powered vehicle, time of flight communications, Radio-frequency identification, RFID, or at least one visual recognition sensor arranged on the electrically powered vehicle. Optionally, Visual servoing with stereo cameras, 3D sensors (such as Lidar, radar), motion sensors or magnetic sensors may be used for determining a relative position of the electrically powered vehicle to the at least one electric conductor.

In some embodiments, the at least one electric conductor is arranged in at least one elongated slotted element, said at least one contact element being connected to the at least one collector arm by means of a tracking device, said tracking device comprising a body part to which said at least one contact element is connected, said tracking device further comprising lateral guiding means configured to co-act with at least one laterally facing portion of the elongated slotted element to guide the tracking device laterally relative to elongated slotted element, wherein at least one of said lateral guiding means is laterally displaceable relative to said body part by means of an alignment actuator such as to be able displace the tracking device in relation to the slotted element when the at least one contact element is within a lateral alignment distance from the slotted element, wherein to displace the collector arm, the ECU is further configured to: control an actuator to displace the at least one collector arm such that the at least one contact element is within said lateral alignment distance, and to actuate the alignment actuator to displace tracking device and thus also the at least one contact element towards slotted element/the at least one electric conductor.

In some embodiments, the lateral guiding means are further configured to co-act with the elongated slotted element such as to prevent movement of the tracking device away from the slotted element, wherein to displace the current collector away from the at least one electric conductor, the ECU is further configured to disengage the guiding means (displace away from the slotted element). Such embodiments comprising guiding means are advantageous since the tracking device and its contact elements are in close and accurate contact with the slotted element. In such embodiments, it is however particularly important to monitor the relative position of the electrically powered vehicle to the at least one electric conductor, so as to avoid that the working distance is exceeded, and the current collector breaks or has reduced lifetime.

The embodiments described above comprising a tracking device are described in greater detail in applicant's previous application WO 2022/096665A1 which is hereby incorporated by reference in its entirety.

In some embodiments, the ECU is further configured to activate a disconnected state, wherein the connection between the current collector and the at least one electric conductor is terminated when the electrically powered vehicle moves outside of said working distance. The ECU may be configured to activate any of the following three states: connectable state, connected state and disconnected state. The state transition between these three states may be based on information obtained by at least one of the following: a local positioning system, simultaneous localization and mapping, SLAM, at least one sensor arranged on the electrically powered vehicle, time of flight communications, RFID, motion sensor, or at least one visual recognition sensor arranged on the electrically powered vehicle. The ECU may also be configured to obtain information in adjustable time intervals based on if it is a connectable state, a connected state, or optionally a disconnected state, so as to save power consumption caused by transmitting and/or receiving information.

In some embodiments, the ECU is configured to activate a disconnected state based on a predicted trajectory of the electrically powered vehicle. For example, based on a predicted trajectory, the electrically powered vehicle may be approaching the end of a rail (i.e., a type of electric conductor). In this case, the ECU may be configured to a disconnected state, and the connection between the rail and the electrically vehicle is terminated. A neural network or another machine learning method may be used together with the information from sensors and information relating to the present position of the electrically powered vehicle for predicting a trajectory of the electrically powered vehicle.

Dynamic prediction may also be used to estimate when the disconnected state will be activated, based on for example historical data or a machine learning method.

In some embodiments, the location of the at least one electric conductor may be stored in a database and the database is used as a reference database for assisting the activation of the connectable state. Optionally, the electric conductor (i.e., a type of a power source) may also have at least one position sensor installed, so that the relative position of the electrically powered vehicle to the at least one electric conductor may be obtained based on information from the at least one position sensor and/or stored data.

In some embodiments, during a time period, both the the at least one electric conductor and the electrically powered vehicle are in motion when the electrically powered vehicle is within a working distance from the at least one electric conductor. In such a scenario, the system can still maintain a connected state, that is, the current collector and the at least one electric conductor are in electric contact with each other, so the electrically powered vehicle in motion is supplied with power.

According to a second aspect of the invention, there is provided a method for automatically connecting and disconnecting at least one current collector of an electrically powered vehicle with at least one electric conductor extending along a road section, on which the electrically powered vehicle is adapted to travel. The at least one current collector comprises at least one contact element adapted to connect electrically with the at least one electric conductor, and at least one displaceable collector arm supporting the at least one contact element at its first end and being connected to the electrically powered vehicle at its second end. The at least one current collector is configured to connect with the at least one electric conductor when the electrically powered vehicle is within a working distance from the at least one electric conductor. The method comprises determining if the electrically powered vehicle and the at least one electric conductor are within said working distance from each other, and if so, activating a connectable state. The method further comprises when the connectable state is active, and the at least one current collector and the at least one electric conductor are not in electric contact, displacing the at least one collector arm towards the at least one electric conductor such as to achieve electric contact between the at least one contact element and the at least one electric conductor, and thereafter activating a connected state. The method further comprises when the connected state is active, monitoring the relative position of the electrically powered vehicle to the at least one electric conductor.

In some embodiments, the monitoring of the relative position of the electrically powered vehicle to the at least one electric conductor comprises using at least one geometrical parameter of the at least one collector arm and at least one present position of said at least one collector arm.

In some embodiments, when the connected state is active, the method further comprises determining if the electrically powered vehicle is heading towards a position outside the working distance from the at least one electric conductor, and if so, displacing the current collector away from the at least one electric conductor such as to disrupt electric contact therebetween, and disabling the connected state and the connectable state.

In some embodiments, when determining if the electrically powered vehicle is heading towards a position outside the working distance from the at least one electric conductor, the method further comprises determining if the relative position and the working distance are within a pre-determined interval from each other.

In some embodiments, when determining if the electrically powered vehicle is heading towards a position outside the working distance from the at least one electric conductor, the method further comprises determining, using a GNSS signal (such as a GPS signal), if the present position of the electrically powered vehicle is within a pre-determined interval from an end of the electric conductor which the current collector is presently connected to.

In some embodiments, when determining if the electrically powered vehicle and the at least one electric conductor are within said working distance from each other, the method comprises determining a position of the electrically powered vehicle and a position of the at least one electric conductor, and/or determining a relative position of the electrically powered vehicle to the at least one electric conductor.

In some embodiments, to displace the at least one collector arm by means of the at least one actuator towards the at least one electric conductor such as to achieve electric contact therebetween, the method further comprises determining a position of the electrically powered vehicle and a position of the at least one electric conductor, and/or determining a relative position of the electrically powered vehicle to the at least one electric conductor, and displacing the collector arm to displace the at least one contact element towards the at least one electric conductor using said positions and/or relative position.

In some embodiments, said determining a position of the electrically powered vehicle and a position of the at least one electric conductor, and/or determining a relative position of the electrically powered vehicle to the at least one electric conductor comprises using a GNSS signal (such as a GPS signal) and/or an augmented GNSS signal (such as an augmented GPS signal).

In some embodiments, said determining a position of the electrically powered vehicle and a position of the at least one electric conductor, and/or determining a relative position of the electrically powered vehicle to the at least one electric conductor comprises using at least one of the following: a local positioning system, simultaneous localization and mapping, SLAM, using at least one sensor arranged on the electrically powered vehicle, time of flight communications, RFID or at least one visual recognition sensor arranged on the electrically powered vehicle. Optionally, Visual servoing with stereo cameras, 3D sensors (such as Lidar, radar), motion sensors or magnetic sensors may be used for determining a relative position of the electrically powered vehicle to the at least one electric conductor.

In some embodiments, said at least one electric conductor is arranged in at least one elongated slotted element. Said at least one contact element is connected to the at least one collector arm by means of a tracking device. Said tracking device comprises a body part to which said at least one contact element is connected. Said tracking device further comprises lateral guiding means configured to co-act with at least one laterally facing portion of the elongated slotted element to guide the tracking device laterally relative to elongated slotted element, wherein at least one of said lateral guiding means is laterally displaceable relative to said body part by means of an alignment actuator such as to be able displace the tracking device in relation to the slotted element when the at least one contact element is within a lateral alignment distance from the slotted element. The method step of displacing further comprises displacing the at least one collector arm such that the at least one contact element is within said lateral alignment distance and actuating the alignment actuator to displace the at least one contact element to the at least one electric conductor.

In some embodiments, the lateral guiding means are further configured to co-act with the elongated slotted element such as to prevent movement of the tracking device away from the slotted element. Said displacing the current collector away from the at least one electric conductor further comprises disengaging the guiding means.

The features of the embodiments described above are combinable in any practically realizable way to form embodiments having combinations of these features. Further, all features and advantages of embodiments described above with reference to the first aspect of the invention may be applied in corresponding embodiments of the second aspect of the invention.

### BRIEF DESCRIPTION OF THE DRAWINGS

Above discussed and other aspects of the present invention will now be described in more detail using the appended drawings, which show presently preferred embodiments of the invention, wherein:
Fig. 1 shows a schematic cross-section view illustration of an embodiment of a system according to the first aspect of the invention;
Fig. 2 shows a schematic cross-section view illustration of parts of another embodiment of a system according to the first aspect of the invention;
Fig. 3 shows a schematic side view illustration of yet another embodiment of a system according to the first aspect of the invention, and
Fig. 4 shows a flowchart of an embodiment of a method according to the second aspect of the invention.

### DETAILED DESCRIPTION

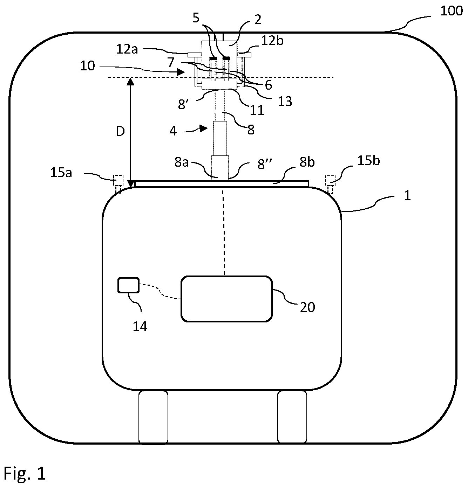

Fig. 1 shows a schematic cross-section view illustration of an embodiment of a system 100 according to a first aspect of the invention. The system 100 comprises at least one electric conductor 5 (shown as two electric conductors for illustration purpose) extending along a road section on which an electrically powered vehicle 1 is adapted to travel. The two electric conductors 5 may be arranged in respective slots 6 in said elongated slotted element 2. The electric conductors 5 may be electrically energized to supply the electrically powered vehicle 1 with electric power. The electrically powered vehicle 1 comprises at least one current collector 4, and an electronic control unit 20, ECU, being electrically connected to said at least one current collector 4. The at least one current collector 4 (shown as one current collector for illustration purpose) comprises at least one contact element 7 (shown as two contact elements for illustration purpose) adapted to connect electrically with the at least one electric conductor 5. The at least one current collector 4 further comprises at least one telescopically displaceable collector arm 8 (shown as one displaceable collector arm for illustration purpose) supporting the at least one contact element 7 at its first end 8'. The at least one displaceable collector arm 8 is connected to the electrically powered vehicle 1 at its second end 8" via a lateral sliding rail 8b. The at least one current collector 4 is configured to connect with the at least one electric conductor 5 when the electrically powered vehicle 1 is within a working distance from the at least one electric conductor 5.

The ECU 20 is configured to determine if the electrically powered vehicle 1 and the at least one electric conductor 5 are within said working distance from each other, and if so, activate a connectable state. To determine if the electrically powered vehicle 1 and the electric conductors 5 are within said working distance from each other, the ECU 20 is further configured to determine a position of the electrically powered vehicle 1 and a position of the at least one electric conductor 5, and/or determine a relative position of the electrically powered vehicle 1 to the at least one electric conductor 5. To determine the position and/or relative position, the ECU may be configured to use a GPS signal and/or an augmented GPS signal obtained from a GPS unit 14.

In other embodiments, the position and/or relative position may be determined using at least one sensor such as at least one visual recognition sensor/camera 15a-b arranged on the electrically powered vehicle 1. The signals from such sensors may be used directly together with geometrical parameters to calculate the position/relative position or may be used as an input to a local positioning system or a simultaneous localization and mapping, SLAM. Alternatively, time of flight communications or RFID sensors may be used.

The ECU 20 is further configured to, when the connectable state is active, control an actuator 8a of the current collector to elongate the collector arm 8 (and optionally to control a not shown actuator of sliding rail 8b to displace the collector arm laterally) to displace the first end 8' of the collector arm (and thus the contact elements 7) towards the at least one electric conductor 5 such as to achieve electric contact between the at least one contact element 7 and the at least one electric conductor 5, and thereafter activate a connected state.

For illustration purposes, in Fig. 1, said at least one electric conductor is shown suspended above a road surface. In other embodiments, the at least one current collector may be connected to a lateral side of the electrically powered vehicle, by means of the at least one displaceable collector arm 8. Alternatively, the at least one electric conductor may be recessed in a road surface, and the at least one current collector may be arranged for connection with the recessed electric conductor, for example as shown in WO 2010/140964 A1.

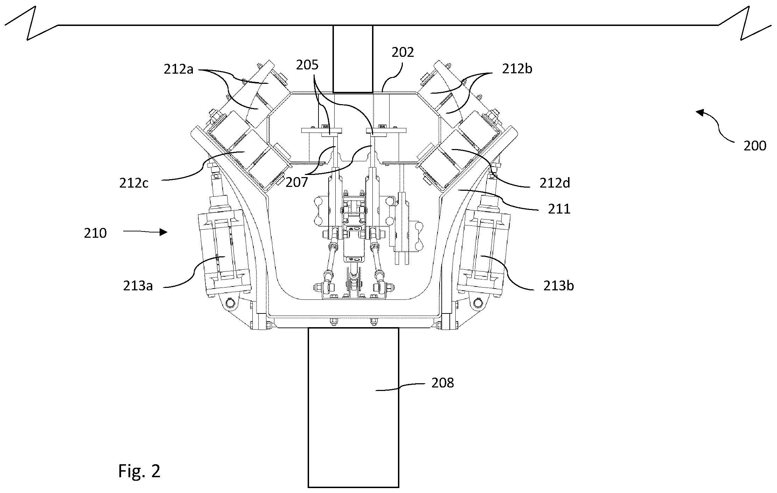

The at least one contact element 7 is shown connected to a roof of the electrically powered vehicle 1 by means of the at least one displaceable collector arm 8. The at least one displaceable collector arm 8 may be configured to displace the at least one contact element 7 vertically to connect with the at least one electric conductor 3. The working distance corresponds to the maximum distance between the vehicle and the electric conductors, which in this embodiment is mostly defined by the maximum elongation of the collector arm 8. The ECU may be connected to a battery set (not shown in Fig. 2a) of the electrically powered vehicle 1. The electrically powered vehicle 1 may be configured to be electrically propellable by means of electric power from its battery set and/or from the at least one current collector 5. The ECU may comprise a processing circuit and a memory wherein the memory contains instructions executable by the processing circuit.

It is understood that the at least one current collector 4 may be connected to the electrically powered vehicle directly or indirectly in different ways.

The contact elements 7 are connected to the at least one collector arm 8 by means of a tracking device 10. The tracking device 10 comprises a body part 11, to which the contact elements 7 are connected. The tracking device 10 further comprises lateral guiding means (illustrated as 12a and 12b) configured to co-act with at least one laterally facing portion of the elongated slotted element 2 to guide the tracking device 10 laterally relative to elongated slotted element 2. At least one of said lateral guiding means 12a, 12b is laterally displaceable relative to said body part 11 by means of an alignment actuator 13 such as to be able displace the contact elements towards the at least one electric conductor when the contact elements 7 are within a lateral alignment distance from the elongated slotted element 2. The alignment actuator 13, which may for example be a hydraulic actuator, a pneumatic actuator, an electric motor or a solenoid. The alignment actuator 13 may alternatively be a mechanical actuator comprising for example a linkage and/or a hydraulic circuit. Examples of alignment actuators and how to use the alignment actuator to displace the contact elements towards the at least one electric conductor can be found in WO 2022/096665 A1. The lateral alignment distance maybe a pre-determined value. The ECU may be configured to receive feedback signal from for example the alignment actuator for adjusting the position of the contact element to align with the at least one electric conductor.

In a situation that the electrically powered vehicle 1 is within a working distance from the at least one electric conductor 5, but the contact elements 7 are outside a lateral alignment distance from the elongated slotted element 2, the ECU 20 may be configured to: displace the at least one collector arm 8 such that the at least one contact element is within said lateral alignment distance. The ECU 20 may be further configured to actuate the alignment actuator 13 to displace the at least one contact element 7 towards the at least one electric conductor 5.

The ECU 20 is further configured to, when the connected state is active, monitor the relative position of the electrically powered vehicle 1 to the electric conductors 5 using at least one geometrical parameter of the at least one collector arm 8 and at least one present position of said at least one collector arm. In this embodiment, the at least one geometrical parameter comprises the lengths of the telescopic portions of the collector arm 8 and the length of the sliding rail 8b. The at least one present position comprises a current position of the actuator 8a (received by the ECU as a feedback signal therefrom) and a current position of the collector arm along the sliding rail 8b (received as a feedback signal from the sliding rail).

The ECU 20 is further configured to, when the connected state is active, determine if the vehicle 1 is heading towards a position outside the working distance from the at least one electric conductor 5, and if so, control the actuators of collector arm 8 to displace the at least one current collector 4 away from the at least one electric conductor 5 such as to disrupt electric contact therebetween, and to disable the connected state and the connectable state. The ECU is configured to determine if the electrically powered vehicle 1 is heading towards a position outside the working distance from the at least one electric conductor 5 by determining, by using a GPS signal obtained from a GPS unit 14, if the present position of the electrically powered vehicle is within a pre-determined interval from an end of the electric conductor 5 which the at least one current collector 4 is presently connected to.

Fig. 2 shows a schematic cross-section view illustration of parts of another embodiment of a system 200 according to the first aspect of the invention. The system corresponds to the embodiment in fig. 1 with the difference being that the slotted element 202 with electric conductors 205, and the tracking device 210 (connected to the current collector arm 208 and provided with contact elements 207) are different.

The slotted element 202 is seen in a cross-section, and the longitudinal end of the current collector is seen. The elongated slotted element 202 differs from the above-described embodiments in that it comprises chamfered guiding edges at the top of the laterally facing portions of the slotted element, and chamfered aligning edges at the bottom. In this embodiment, the edges are chamfered at 45 degrees angle relative the direction of movement of the contact elements, which in the shown vertical alignment equals to 45 degrees relative a vertical plane. The elongated slotted element comprises two electric conductors 205 arranged in respective slots 207 in the elongated slotted element.

The tracking device 210 comprises two sets of aligning wheels 212c-d on each lateral side thereof (only one set on each side can be seen in fig. 2), the aligning wheels being stationary (apart from rolling motion) relative the body part 211. The aligning wheels are angled at 45 degrees such as to be able to roll against the lower chamfered aligning edges of the slotted element and thus form vertical and lateral guiding means.

The tracking device 210 further comprises guiding means in the form of two sets of lateral guiding wheels 212a, 212b on each lateral side of the body part 211 (only one set on each side can be seen in fig. 2). The guiding wheels are laterally displaceable relative the body part by means of being rotatably attached to a respective holding element which is pivotable/rotatable relative the body part around axes of rotation. The alignment actuators 213a-b pivots/rotates the holding elements such that the guiding wheels are displaced towards and away from the slotted element.

To displace the collector arm 208 towards the slotted element, the ECU is configured to:
- displace the at least one collector arm 208 such that the at least one contact element 207 is within a lateral alignment distance, This is achieved by means of sliding action of the wheels 212a-d on the lower chamfered edges, as explained in further detail in in WO 2022/096665 A1.
- actuate the alignment actuators 213a-b to pivot the lateral guiding wheels 212a and 212b towards the upper chamfered edges of the slotted element. This will displace the tracking device into position such that the contact elements 207 are accurately laterally aligned with the electric conductors 205 and therefore can be displaced into contact therewith.

When the tracking device is in the position shown in fig. 2. The guiding wheels prevent movement of the tracking device 210 away from the slotted element. This makes it particularly important to monitor the relative position of the vehicle and the slotted element/conductors in accordance with the invention. To displace the current collector away from the at least one electric conductor, the ECU is further configured to actuate the alignment actuators 213a-b to pivotably displace the guiding wheels away from the slotted element.

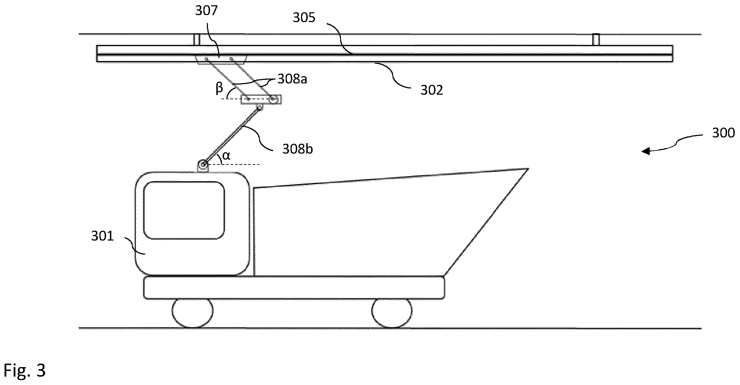

Fig. 3 shows a schematic side view illustration of yet another embodiment of a system 300 according to the first aspect of the invention.

Just like in the embodiments in fig. 1 and 2, the system comprises at least one electric conductor 305 arranged in a slotted element 302 and extending along a road section on which the electrically powered vehicle 301 is adapted to travel, and the electrically powered vehicle 301 comprises a current collector with at least one contact element 307, and an electronic control unit ECU, operating in a corresponding manner as described above with reference to fig. 1. The main difference to fig. 1 and 2 is that the current collector arm is formed from two serially arranged pivotable collector arm segments 308, 308b (such as described in applicant's earlier application WO 2022/096112A1, which is hereby incorporated by reference in its entirety). The geometrical parameters used by the ECU may comprise the lengths of the collector arm segments and the at least one present position may comprise current angular positions α, β of the collector arm segments.

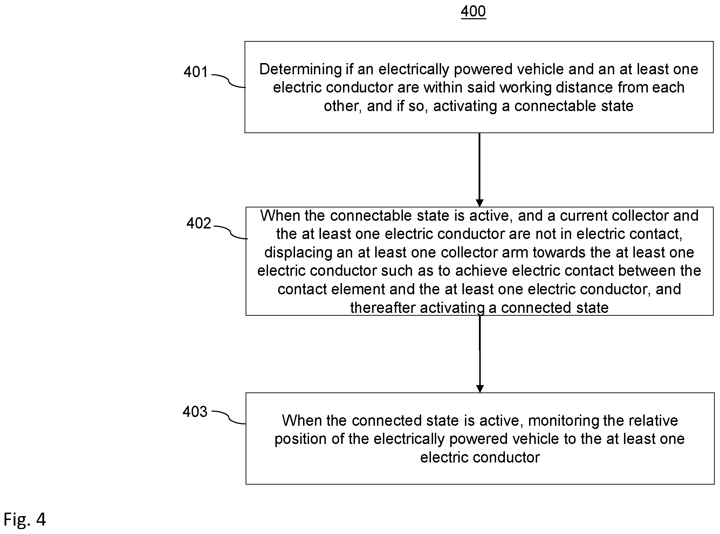

Fig. 4 shows a flowchart of an embodiment of a method 400 according to the second aspect of the invention. At method step 401, the method 400 comprises determining if the electrically powered vehicle and the at least one electric conductor are within said working distance from each other, and if so, activating a connectable state. At method step 402, the method comprises when the connectable state is active, and the current collector and the at least one electric conductor are not in electric contact, displacing the at least one collector arm towards the at least one electric conductor such as to achieve electric contact between the contact element and the at least one electric conductor, and thereafter activating a connected state. At method step 403, the method 400 comprises when the connected state is active, monitoring the relative position of the electrically powered vehicle to the at least one electric conductor. The method steps may be performed by an ECU.

The description above and the appended drawings are to be considered as non-limiting examples of the invention. The person skilled in the art would realize that changes and modifications may be made within the scope of the invention. For example, the GPS unit can be replaced with another type of GNSS unit.

## Claims

1. A system (100, 200, 300) for electrically feeding at least one electrically powered vehicle (1; 201; 301), the system (100, 200; 300) comprising:
- at least one electric conductor (5, 205; 305) extending along a road section on which the at least one electrically powered vehicle (1; 201; 301) is adapted to travel,
- at least one electrically powered vehicle (1; 201; 301) comprising at least one current collector (4, 204), and an electronic control unit (20, 220), ECU, being electrically connected to said at least one current collector (4, 204), wherein the at least one current collector (4, 204) comprising at least one contact element (7; 207; 307) adapted to connect electrically with the at least one electric conductor (5; 205; 305), and wherein the at least one current collector (4, 204) further comprising at least one displaceable collector arm (8; 208; 308a-b) supporting the at least one contact element (7; 207; 307) at its first end (8', 208') and being connected to the electrically powered vehicle (1, 201; 301) at its second end (8", 208"), and wherein the at least one current collector (4, 204) is configured to connect with the at least one electric conductor (5; 205; 305) when the electrically powered vehicle (1; 201; 301) is within a working distance from the at least one electric conductor (5; 205; 305), and wherein the ECU (20, 220) is configured to:
- determine if the electrically powered vehicle (1; 201; 301) and the at least one electric conductor (5; 205; 305) are within said working distance from each other, and if so, activate a connectable state;
- when the connectable state is active, and the at least one current collector (4; 204) and the at least one electric conductor (5; 205) are not in electric contact, displace the at least one collector arm (8; 208; 308a-b) towards the at least one electric conductor (5; 205; 305) such as to achieve electric contact between the at least one contact element (7; 207; 307) and the at least one electric conductor (5; 205; 305), and thereafter activate a connected state; and
- when the connected state is active, monitor the relative position of the electrically powered vehicle (1; 201; 301) to the at least one electric conductor (5; 205; 305).

2. The system (100; 200; 300) according to claim 1, wherein the ECU (20, 220) is configured to monitor the relative position of the electrically powered vehicle (1; 201; 301) to the at least one electric conductor (5; 205; 305) using at least one geometrical parameter of the at least one collector arm (8; 208; 308a-b) and at least one present position of said at least one collector arm (8; 208; 308a-b).

3. The system (100; 200; 300) according to claim 1 or 2, wherein the ECU (20, 220) is further configured to:
- when the connected state is active, determine if the vehicle (1; 201; 301) is heading towards a position outside the working distance from the at least one electric conductor (5; 205; 305), and if so, displace the at least one current collector (4, 204) away from the at least one electric conductor (5; 205; 305) such as to disrupt electric contact therebetween, and
- disable the connected state and the connectable state.

4. The system (100; 200; 300) according to claim 3, wherein to determine if the electrically powered vehicle (1; 201; 301) is heading towards a position outside the working distance from the at least one electric conductor (5; 205; 305), the ECU (20, 220) is further configured to determine if the relative position and the working distance are within a pre-determined interval from each other.

5. The system (100; 200; 300) according to claim 3, wherein to determine if the electrically powered vehicle (1; 201; 301) is heading towards a position outside the working distance from the at least one electric conductor (5; 205; 305), the ECU (20, 220) is further configured to determine, by using a GNSS signal such as a GPS signal, if the present position of the electrically powered vehicle (1; 201; 301) is within a pre-determined interval from an end of the electric conductor (5; 205; 305) which the at least one current collector (4, 204) is presently connected to.

6. The system (100; 200; 300) according to any of the preceding claims, wherein to determine if the electrically powered vehicle (1; 201; 301) and the at least one electric conductor (5; 205; 305) are within said working distance from each other, the ECU (20, 220) is further configured to determine a position of the electrically powered vehicle (1; 201; 301) and a position of the at least one electric conductor (5; 205; 305), and/or determine a relative position of the electrically powered vehicle (1; 201; 301) to the at least one electric conductor (5; 205; 305).

7. The system (100; 200; 300) according to any of the preceding claims, wherein to displace the at least one collector arm (8; 208; 308a-b) by means of the at least one actuator towards the at least one electric conductor (5; 205; 305) such as to achieve electric contact therebetween, the ECU (20, 220) is further configured to determine a position of the electrically powered vehicle (1; 201; 301) and a position of the at least one electric conductor (5; 205; 305), and/or determine a relative position of the electrically powered vehicle (1; 201; 301) to the at least one electric conductor (5; 205; 305), and displace the collector arm (8; 208; 308a-b) to displace the at least one contact element (7; 207; 307) towards the at least one electric conductor (5; 205; 305) using said positions and/or relative position.

8. The system (100; 200; 300) according to claim 6 or 7, wherein to determine a position of the electrically powered vehicle (1; 201; 301) and a position of the at least one electric conductor (5; 205; 305), and/or determine a relative position of the electrically powered vehicle (1; 201; 301) to the at least one electric conductor (5; 205; 305) comprises using a GNSS signal such as a GPS signal and/or an augmented GNSS signal such as an augmented GPS signal.

9. The system (100; 200; 300) according to claim 6 or 7, wherein to determine a position of the electrically powered vehicle (1; 201; 301) and a position of the at least one electric conductor (5; 205; 305), and/or determine a relative position of the electrically powered vehicle (1; 201; 301) to the at least one electric conductor (5; 205; 305) comprises using at least one of the following: a local positioning system (100; 200; 300), simultaneous localization and mapping, SLAM, at least one sensor arranged on the electrically powered vehicle (1; 201; 301), time of flight communications, RFID or at least one visual recognition sensor arranged on the electrically powered vehicle (1; 201; 301).

10. The system (100; 200; 300) according to claim 7, wherein said at least one electric conductor (5; 205; 305) is arranged in at least one elongated slotted element (202), said at least one contact element (7; 207; 307) being connected to the at least one collector arm (8; 208; 308a-b) by means of a tracking device (10; 210), said tracking device (10; 210) comprising a body part (211) to which said at least one contact element (7; 207; 307) is connected, said tracking device (10; 210) further comprising lateral guiding means (212a, 212b) configured to co-act with at least one laterally facing portion of the elongated slotted element (202) to guide the tracking device (10; 210) laterally relative to elongated slotted element (202), wherein at least one of said lateral guiding means (212a, 212b) is laterally displaceable relative to said body part (211) by means of an alignment actuator (213) such as to be able displace the tracking device in relation 7; 207; 307to the slotted element when the at least one contact element (7; 207; 307) is within a lateral alignment distance from the slotted element, wherein to displace the collector arm (8; 208; 308a-b) , the ECU (20, 220) is further configured to:
- displace the at least one collector arm (8; 208; 308a-b) such that the at least one contact element (7; 207; 307) is within said lateral alignment distance, and
- actuate the alignment actuator (213) to displace the at least one contact element (7; 207; 307) towards the at least one electric conductor (5; 205; 305).

11. The system (100; 200; 300) according to claim 10 as dependent on claim 3, wherein said lateral guiding means (212a, 212b) are further configured to co-act with the elongated slotted element (202) such as to prevent movement of the tracking device (10; 210) away from the slotted element, wherein to displace the at least one current collector (4, 204) away from the at least one electric conductor (5; 205; 305), the ECU (20, 220) is further configured to disengage the lateral guiding means (212a, 212b).

12. A method (300) for automatically connecting and disconnecting at least one current collector (4, 204) of an electrically powered vehicle (1; 201; 301) with at least one electric conductor (5; 205; 305) extending along a road section on which the electrically powered vehicle (1; 201; 301) is adapted to travel, the at least one current collector (4, 204) comprising at least one contact element (7; 207; 307) adapted to connect electrically with the at least one electric conductor (5; 205; 305), and at least one displaceable collector arm (8; 208; 308a-b) supporting the at least one contact element (7; 207; 307) at its first end (8', 208') and being connected to the electrically powered vehicle (1; 201; 301) at its second end (8", 208"), wherein the at least one current collector (4, 204) is configured to connect with the at least one electric conductor (5; 205; 305) when the electrically powered vehicle (1; 201; 301) is within a working distance from the at least one electric conductor (5; 205; 305), the method (300) comprising:
- determining (301) if the electrically powered vehicle (1; 201; 301) and the at least one electric conductor (5; 205; 305) are within said working distance from each other, and if so, activating a connectable state;
- when the connectable state is active, and the at least one current collector (4, 204) and the at least one electric conductor (5; 205; 305) are not in electric contact, displacing (302) the at least one collector arm (8; 208; 308a-b) towards the at least one electric conductor (5; 205; 305) such as to achieve electric contact between the at least one contact element (7; 207; 307) and the at least one electric conductor (5; 205; 305), and thereafter activating a connected state; and
- when the connected state is active, monitoring (303) the relative position of the electrically powered vehicle (1; 201; 301) to the at least one electric conductor (5; 205; 305).

13. The method (300) according to claim 12, wherein the monitoring the relative position of the electrically powered vehicle (1; 201; 301) to the at least one electric conductor (5; 205; 305) comprises using at least one geometrical parameter of the at least one collector arm (8; 208; 308a-b) and at least one present position of said at least one collector arm (8; 208; 308a-b).

14. The method (300) according to claim 12 or 13, further comprising, when the connected state is active, determining if the electrically powered vehicle (1; 201; 301) is heading towards a position outside the working distance from the at least one electric conductor (5; 205; 305), and if so, displacing the at least one current collector (4, 204) away from the at least one electric conductor (5; 205; 305) such as to disrupt electric contact therebetween, and disabling the connected state and the connectable state.

15. The method (300) according to claim 14, wherein said determining if the electrically powered vehicle (1; 201; 301) is heading towards a position outside the working distance from the at least one electric conductor (5; 205; 305) comprises determining if the relative position and the working distance are within a pre-determined interval from each other.

16. The method (300) according to claim 14, wherein said determining if the electrically powered vehicle (1; 201; 301) is heading towards a position outside the working distance from the at least one electric conductor (5; 205; 305) comprises determining, using a GNSS signal such as a GPS signal, if the present position of the electrically powered vehicle (1; 201; 301) is within a pre-determined interval from an end of the electric conductor (5; 205; 305) which the at least one current collector (4, 204) is presently connected to.

17. The method (300) according to any of the preceding claims, wherein said determining if the electrically powered vehicle (1; 201; 301) and the at least one electric conductor (5; 205; 305) are within said working distance from each other comprises determining a position of the electrically powered vehicle (1; 201; 301) and a position of the at least one electric conductor (5; 205; 305), and/or determining a relative position of the electrically powered vehicle (1; 201; 301) to the at least one electric conductor (5; 205; 305).

18. The method (300) according to any of the preceding claims, wherein said displacing the at least one collector arm (8; 208; 308a-b) by means of the at least one actuator towards the at least one electric conductor (5; 205; 305) such as to achieve electric contact therebetween comprises determining a position of the electrically powered vehicle (1; 201; 301) and a position of the at least one electric conductor (5; 205; 305), and/or determining a relative position of the electrically powered vehicle (1; 201; 301) to the at least one electric conductor (5; 205; 305), and displacing the collector arm (8; 208; 308a-b) to displace the at least one contact element (7; 207; 307) towards the at least one electric conductor (5; 205; 305) using said positions and/or relative position.

19. The method (300) according to claim 17 or 18, wherein said determining a position of the electrically powered vehicle (1; 201; 301) and a position of the at least one electric conductor (5; 205; 305), and/or determining a relative position of the electrically powered vehicle (1; 201; 301) to the at least one electric conductor (5; 205; 305) comprises using a GNSS signal such as a GPS signal and/or an augmented GNSS signal such as an augmented GPS signal.

20. The method (300) according to claim 17 or 18, wherein said determining a position of the electrically powered vehicle (1; 201; 301) and a position of the at least one electric conductor (5; 205; 305), and/or determining a relative position of the electrically powered vehicle (1; 201; 301) to the at least one electric conductor (5; 205; 305) comprises using at least one of the following: a local positioning system (100; 200; 300), simultaneous localization and mapping, SLAM, using at least one sensor arranged on the electrically powered vehicle (1; 201; 301), time of flight communications, RFID or at least one visual recognition sensor arranged on the electrically powered vehicle (1; 201; 301).

21. The method (400) according to claim 18, wherein said at least one electric conductor (5; 205; 305) is arranged in at least one elongated slotted element (2; 202), said at least one contact element (7; 207) being connected to the at least one collector arm (8; 208) by means of a tracking device (10; 210), said tracking device (10; 210) comprising a body part (11; 211) to which said at least one contact element (7; 207) is connected, said tracking device (10; 210) further comprising lateral guiding means (12a, 12b; 212a, 212b) configured to co-act with at least one laterally facing portion of the elongated slotted element (2; 202) to guide the tracking device (10; 210) laterally relative to elongated slotted element (2; 202), wherein at least one of said lateral guiding means (12a, 12b; 212a, 212b) is laterally displaceable relative to said body part (11; 211) by means of an alignment actuator (13; 213a-b) such as to displace the tracking device in relation to the slotted element when the at least one contact element (7; 207) is within a lateral alignment distance from the slotted element, wherein said displacing comprises
- displacing the at least one collector arm (8; 208) such that the at least one contact element (7; 207) is within said lateral alignment distance, and
- actuating the alignment actuator (13; 213a-b) to displace the at least one contact element (7; 207; 307) towards the at least one electric conductor (5; 205).

22. The method (300) according to claim 21 as dependent on claim 14, wherein the lateral guiding means (212a, 212b) are further configured to prevent movement of the tracking device (210) away from the slotted element, wherein said displacing the at least one current collector (204) away from the at least one electric conductor (5; 205; 305) comprises disengaging the lateral guiding means (212a, 212b).
